# FASCICULE DE BREVET EUROPEEN

(11) **EP 3 587 896 B1**
(45) Date de publication et mention de la délivrance du brevet: **03.09.2025**
(21) Numéro de dépôt: 19181412.8
(22) Date de dépôt: 20.06.2019
(51) Int. Cl.: F17C 13/04

(54) **RÉGULATEUR D'ALIMENTATION EN GAZ**
GASVERSORGUNGSREGLER
GAS SUPPLY REGULATOR

(30) Priorité: 25.06.2018 FR 1855668
(43) Date de publication de la demande: 01.01.2020
(73) Titulaire: Clesse Industries, 63800 Cournon d'Auvergne (FR)
(72) Inventeur: BEAUGIER, Franck, 63111 Dallet (FR); FOURNIER, Eric, 63310 Saint Sylvestre Pragoulin (FR)
(74) Mandataire: Germain Maureau

(56) Documents cités:
- EP-A1- 3 114 391
- WO-A1-2004/070259
- WO-A1-2016/041878
- WO-A1-2018/107217
- DE-A1- 3 100 598
- DE-U- 1 948 934
- FR-A- 1 042 016
- FR-A- 1 042 016
- FR-A1- 3 034 837
- US-A- 4 352 085
- US-B2- 6 536 456
- US-B2- 8 857 277

## Description

La présente invention se rapporte à un régulateur d'alimentation en gaz.

Dans le cadre de la présente invention, un régulateur d'alimentation en gaz désigne un appareil situé entre une ou plusieurs bouteilles d'alimentation en gaz et un ou plusieurs appareils consommant du gaz, tel qu'une table de cuisson.

Un tel régulateur peut être un inverseur automatique, un détendeur de pression (par exemple tel qu'il est divulgué par la demande de brevet français 11/61982 déposée au nom de la demanderesse), ou bien un limiteur de pression.

Un inverseur automatique permet de basculer automatiquement d'une bouteille de gaz de service vers une bouteille de gaz de réserve lorsque la pression de la bouteille de gaz de service descend en dessous d'un seuil prédéterminé, de manière à assurer l'alimentation constante d'un appareil consommant du gaz, tel qu'une table de cuisson par exemple.

Un tel inverseur automatique est installé en amont d'un détendeur, ce dernier permettant d'abaisser la pression du gaz dans une plage de pression compatible avec le fonctionnement de l'appareil consommant du gaz.

Le document FR 1042 016 montre un dispositif permettant à deux bouteilles de gaz de fonctionner alternativement.

La présente invention vise notamment à mieux gérer le remplacement des bouteilles de gaz alimentant l'inverseur, de manière notamment à éviter toute pénurie d'alimentation de l'appareil consommant du gaz, et plus généralement à mieux suivre le comportement d'un régulateur d'alimentation en gaz tel qu'un inverseur automatique, un détendeur de pression, ou bien un limiteur de pression.

On atteint ce but de l'invention avec un ensemble d'inverseur automatique selon la revendication 1 et selon les revendications indépendantes 2 à 9.

Grâce à la présence de ces moyens de détection de pression, on peut avoir des informations utiles sur le comportement de l'ensemble de régulation : passage d'un inverseur sur la réserve, d'un détendeur en coupure de surpression (système OPSO) ou de sous-pression (système UPSO), correcte installation de l'inverseur / du détendeur / du limiteur, etc.

Grâce à la présence de ces moyens de détection de pression, on peut savoir quand l'inverseur automatique a basculé de la première bouteille de gaz, dite bouteille de service, vers la deuxième bouteille de gaz, dite bouteille de réserve.

On peut alors exploiter cette information, de manière à anticiper le remplacement de la bouteille de service vide, et éviter ainsi toute pénurie d'alimentation de l'appareil consommant du gaz.

Suivant encore d'autres caractéristiques optionnelles avantageuses de la présente invention :
lesdits moyens de détection comprennent des moyens de mesure de variation d'un champ magnétique (comme une sonde à effet hall);
lesdits moyens de détection de pression de gaz comprennent une membrane souple formant l'une des parois de ladite chambre, rappelée élastiquement en direction de ladite chambre par un ressort, cette membrane souple supportant une cage renfermant un aimant, ces moyens de détection comprenant en outre lesdits moyens de mesure montés fixes par rapport au corps de l'inverseur automatique, aptes à interagir magnétiquement avec ledit aimant : grâce à ces caractéristiques, les positions relatives de l'aimant par rapport à la sonde fournissent des informations fiables sur la position de l'aimant et par conséquent le niveau de pression en amont de la sortie de l'inverseur automatique ; dans le cas d'un inverseur automatique, ces informations permettent, outre de détecter le passage de l'alimentation en gaz de la bouteille de service vers la bouteille de réserve, de détecter si les bouteilles ne sont pas installées, mal installées , si le moyen de mesure est mal installé, ou bien encore si l'inverseur est situé proche d'une surface magnétique ou magnétisable, susceptible de perturber les signaux engendrés par la sonde ; ces informations permettent également de savoir si le support sur lequel est monté la sonde est bien ou mal installé, voire pas installé du tout ;
ledit ensemble de régulation comprend un circuit électronique de communication, relié auxdits moyens de mesure, et permettant de transmettre vers l'extérieur les signaux engendrés par ces moyens de mesure : la présence de ce circuit de communication permet d'exploiter ces signaux, afin d'assurer au mieux la gestion des bouteilles de gaz, et, le cas échéant, de détecter des anomalies de fonctionnement ou de branchement ;
ledit circuit électronique de communication est noyé dans de la résine : cela permet à ce circuit de fonctionner en environnement ATEX, c'est-à-dire d'éviter tout risque d'explosion sous l'effet d'une étincelle électrique, en cas de fuite de gaz ;
ledit circuit électronique comprend des moyens de communication sans fil, et une batterie d'alimentation : ces caractéristiques permettent à ce circuit électronique de fonctionner de manière complètement autonome, sans fil. Cela permet par exemple à un fournisseur de bouteilles de gaz de gérer par télémétrie l'approvisionnement de ses clients ;
lesdits moyens de mesure et ledit circuit électronique sont montés sur une plaque pouvant être rapportée de manière optionnelle sur le corps dudit ensemble de régulation : cela permet d'avoir un seul modèle de corps d'ensemble de régulation, pouvant être équipé ou non de l'option de suivi de pression ;
ledit ensemble comprend en outre un détendeur de pression muni de ses propres moyens de détection ;
ledit ensemble comprend en outre un limiteur de pression muni de ses propres moyens de détection.

D'autres caractéristiques et avantages de la présente invention apparaîtront à la lumière de la description qui va suivre, et à l'examen des figures ci-annexées, dans lesquelles :
- la figure 1 est une vue en perspective éclatée d'un ensemble d'inverseur automatique, sur laquelle on peut voir d'une part l'inverseur à proprement parler, et d'autre part la plaque de détection pouvant être rapportée sur le corps de cet inverseur, comprenant la sonde à effet hall, et le circuit électronique de communication ;
- les figures 2 et 3 sont des vues en coupe prises selon le plan P de la figure 1 dudit inverseur dans deux positions respectives de fonctionnement, et de ladite plaque de détection, un certain nombre d'organes de l'inverseur n'ayant pas été représentés, dans un but de simplification, et
- la figure 4 est une vue en perspective en coupe selon le même plan P de l'ensemble de la figure 3,
- la figure 5 est une vue en perspective en coupe d'un détendeur de pression conforme à l'invention,
- la figure 6 est une vue en coupe en perspective d'un ensemble de régulation selon l'invention, comprenant d'une part un inverseur automatique I conforme à l'une quelconque des figures 1 à 4, et d'autre part un détendeur de pression D conforme à la figure 5, et
- la figure 7 est une vue en coupe en perspective d'un ensemble de régulation selon l'invention, comprenant d'une part un inverseur automatique I conforme à l'une quelconque des figures 1 à 4, et d'autre part un limiteur de pression L.

Sur l'ensemble de ces figures, des références identiques ou analogues désignent des organes ou ensemble d'organes identiques ou analogues.

On a par ailleurs représenté sur l'ensemble de ces figures un repère XYZ commun, permettant de bien comprendre les orientations respectives de ces figures les unes par rapport aux autres.

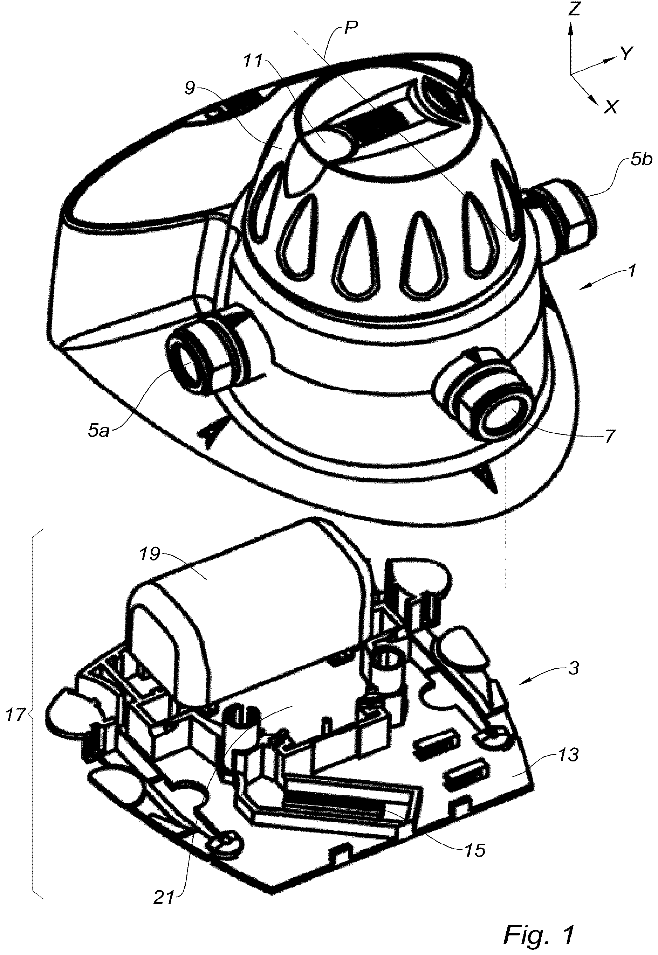

On se reporte à présent à la figure 1, sur laquelle on peut voir qu'un inverseur automatique selon l'invention comprend d'une part l'inverseur automatique 1 à proprement parler, et d'autre part une plaque de détection 3.

Comme cela est connu en soi, l'inverseur automatique comprend des entrées de gaz 5a et 5b, destinées à être reliées chacune à une bouteille d'alimentation en gaz (ces bouteilles n'étant pas représentées).

L'inverseur 1 comprend également une sortie de gaz 7, destinée à alimenter un appareil consommant du gaz.

Cet inverseur 1 comprend également un bouton rotatif 9 muni d'un voyant 11, ce voyant 11 affichant une couleur particulière lorsque la bouteille d'alimentation en gaz dite « de service », c'est-à-dire la première bouteille utilisée, est pratiquement vide, et que l'inverseur a basculé sur la deuxième bouteille de gaz, dite « de réserve ».

Le mode de fonctionnement particulier d'un tel inverseur automatique fait partie de l'état de la technique, et ne sera donc pas détaillé ici : il faut simplement retenir que son principe de fonctionnement repose sur un système de ressorts et de clapets, ces ressorts étant tarés de sorte que lorsque la pression du gaz sortant de la bouteille de service descend en dessous d'un seuil prédéterminé (typiquement de l'ordre de 1,5 bars, mais peut prendre toute autre valeur), les clapets changent de position, permettant le basculement de l'alimentation en gaz de la bouteille de service vers la bouteille de réserve.

La plaque de détection 3 comprend un support 13, formé de préférence en matière plastique, ou en toute matière amagnétique, sur lequel sont fixés d'une part une sonde de mesure de champ magnétique telle qu'une sonde à effet Hall 15, et d'autre part un module électronique 17, relié électriquement à la sonde 15.

Le module 17 comprend une batterie 19 et une carte électronique 21, cette carte étant de préférence noyée dans de la résine, de manière à éviter tout risque d'explosion par étincelle électrique, en cas de fuite de gaz.

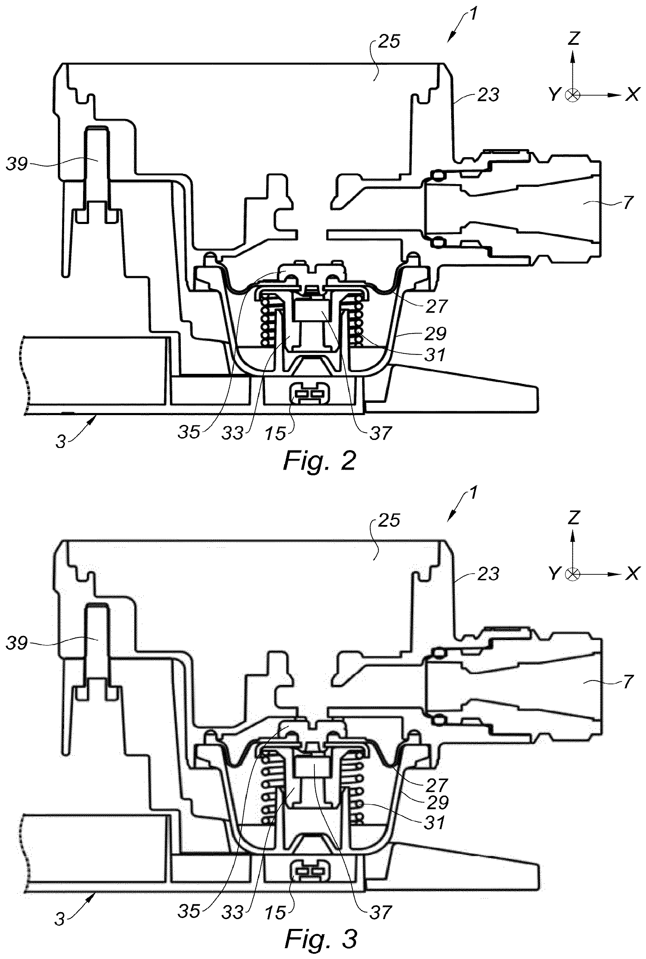

La coopération entre la plaque de détection 3 et l'inverseur 1 va être comprise à l'examen des figures 2 à 4 ci-annexées.

Le corps 23 de l'inverseur 1 comprend une chambre 25 communiquant avec la sortie de gaz 7.

C'est dans cette chambre 25 qu'arrive le gaz en provenance de l'une ou l'autre des bouteilles de service et de réserve. Face à cette chambre 25, et en communication avec celle-ci, se trouve une membrane souple 27, fermant une cuvette 29.

Cette membrane souple 27 est rappelée en direction de la chambre 25 par un ressort hélicoïdal 31.

La membrane souple 27 est reliée à une cage 33 par une bride 35, la cage 33 étant de préférence formée en matière plastique, mais surtout amagnétique.

À l'intérieur de la cage 33 se trouve un aimant 37, susceptible d'interagir magnétiquement avec la sonde à effet Hall 15 de la plaque de détection 3, cette sonde à effet Hall pouvant être remplacée par tout autre composant électronique permettant d'effectuer une mesure de valeur du champ magnétique.

Cette plaque de détection 3 est rapportée sur le corps 23 de l'inverseur 1 par des moyens de fixation appropriés.

Le mode de fonctionnement et les avantages de l'ensemble d'inverseur qui vient d'être décrits sont les suivants.

La figure 2 représente l'ensemble d'inverseur lorsqu'il est alimenté par la bouteille de gaz de service : la pression dans la chambre 25 du corps un de cet inverseur est relativement élevée (typiquement au-dessus de 1,5 bars) de sorte que la membrane 27 est en position basse sur la figure 2, c'est-à-dire que l'élément 37 est relativement proche de la sonde à effet Hall 15 : en mesurant le champ magnétique correspondant à cette position particulière, la sonde à effet Hall envoie au circuit électronique 21 un signal indiquant que l'inverseur fonctionne sur la bouteille de gaz de service.

Si la carte électronique 21 est dotée de moyens de communication vers l'extérieur, cette information peut être exportée vers un serveur, typiquement par l'intermédiaire d'un module de communication sans fil du type Bluetooth, Wi-fi, GSM, loT ou tout autre système de communication à venir.

Lorsque la bouteille de service est pratiquement vide, la pression dans la chambre 25 du corps 23 de l'inverseur 1 baisse, et grâce au mécanisme connu en soi et susmentionné, l'alimentation en gaz de cet inverseur bascule de la bouteille de service vers la bouteille de réserve.

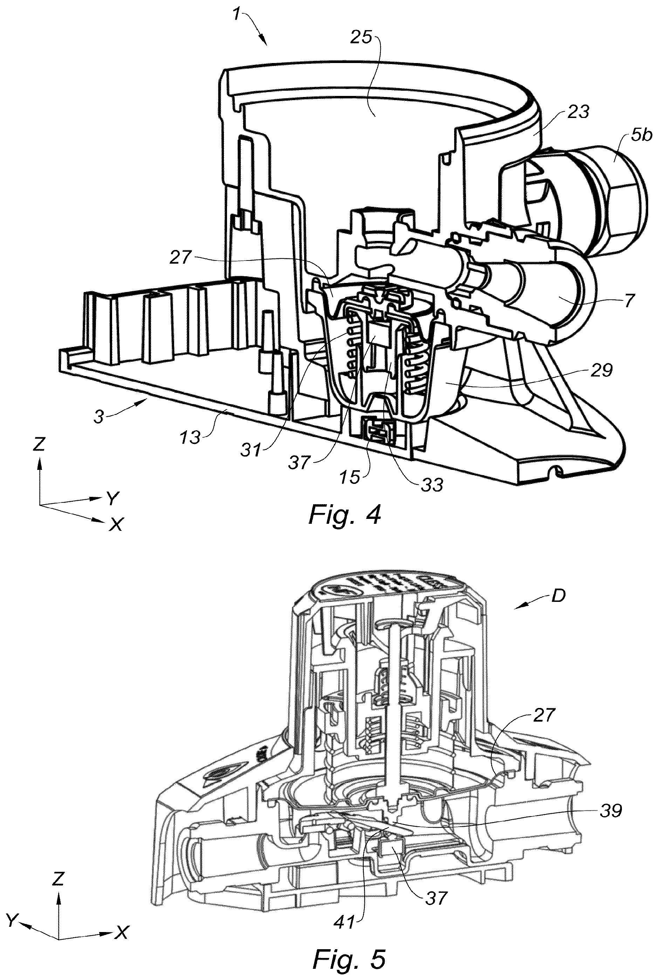

La pression dans la chambre 25 ayant baissé, la membrane souple 27 remonte, comme visible sur les figures 3 et 4, de sorte que l'aimant 37 s'éloigne de la sonde 15.

Cette sonde envoie alors l'information correspondante au circuit électronique 21, indiquant que l'inverseur a basculé de la bouteille de service vers la bouteille de réserve.

Ces informations peuvent être récupérées par un fournisseur de bouteilles de gaz, qui peut de la sorte anticiper les besoins de ses clients, et réapprovisionner ceux-ci de manière à éviter toute pénurie d'alimentation en gaz.

Un autre avantage significatif de la présente invention est que la sonde à effet Hall permet de détecter des défauts de fonctionnement de l'inverseur, tels qu'une absence alimentation en gaz, une mauvaise installation de l'une des bouteilles, ou bien la présence d'une masse magnétique à proximité de l'inverseur, susceptible de perturber les signaux envoyés par la sonde effet Hall.

Cette sonde permet en outre de vérifier si l'ensemble formé par l'inverseur et les moyens de mesure de la valeur du champ magnétique engendré par l'aimant, n'a pas subi de dégradation mécanique du fait d'une action externe : il suffit pour cela de comparer les valeurs renvoyées par la sonde aux valeurs d'installation.

Ces dysfonctionnements peuvent être aisément repérés en analysant la dérive des signaux renvoyés par la sonde à effet Hall, par rapport aux signaux correspondant à une situation de fonctionnement normal.

Bien entendu, la présente invention n'est nullement limitée au mode de réalisation décrit et représenté, fourni à titre de simple exemple.

C'est ainsi que la présente invention peut aussi s'appliquer à un détendeur de pression D, tel que représenté en coupe sur la figure 5 : dans ce cas, l'aimant 37 est solidaire en mouvement du doigt 39 agissant sur le levier de régulation 41, ce doigt 39 étant lui-même solidaire de la membrane souple 27.

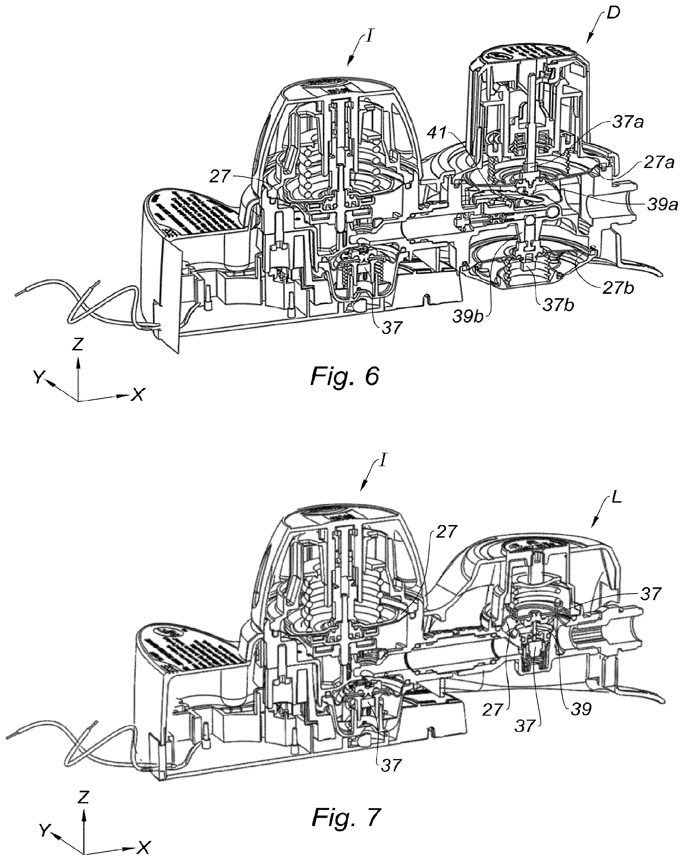

Dans l'exemple représenté à la figure 6, l'ensemble de régulation selon l'invention comprend d'une part un détenteur D conforme à la figure 5 et d'autre part un inverseur I couplé en amont du détendeur D.

A la différence de l'inverseur I de la figure 5, l'inverseur I de la figure 6 est du type comprenant à la fois un système de coupure du gaz en cas de surpression (système OPSO - « Over Pressure Shut Off »), et un système de coupure du gaz en cas de sous-pression (système UPSO - « Under Pressure Shut Off ») : il y a dans ce cas deux membranes 27a, 27b et deux aimants 37a, 37b, associés chacun à des sondes à effet Hall (non représentées).

Dans l'exemple représenté à la figure 7, l'ensemble de régulation selon l'invention comprend d'une part un limiteur L et d'autre part un inverseur I conforme à l'une quelconque des figures 1 à 4 couplé en amont du limiteur L.

## Revendications

1. Ensemble d'inverseur automatique pour alimentation de gaz, du type comprenant au moins deux entrées (5a, 5b) aptes à être couplées à au moins deux bouteilles de gaz, une sortie (7) apte à être couplée à un appareil consommant du gaz, des moyens pour basculer automatiquement l'alimentation en gaz de l'une desdites entrées (5a, 5b) par l'une desdites bouteilles vers l'autre entrée par l'autre des desdites bouteilles lorsque la pression d'alimentation en gaz descend en dessous d'un seuil prédéterminé, l'ensemble comprenant au moins une entrée (5a,5b) apte à être mise en communication de fluide avec au moins une bouteille de gaz, et une sortie (7) apte à être mise en communication de fluide avec un appareil consommant du gaz, et des moyens (15, 37) pour détecter la pression du gaz dans une chambre (25) communiquant avec ladite sortie (7), lesdits moyens de détection comprenant des moyens de mesure (15) de variation d'un champ magnétique.

2. Ensemble selon l'une quelconque des revendications 1, dans lequel lesdits moyens de mesure comprennent une sonde à effet Hall ou éléments permettant d'effectuer une mesure de champ magnétique (15).

3. Ensemble selon la revendication 1 ou 2, dans lequel lesdits moyens de détection de pression de gaz comprennent une membrane souple (27) formant l'une des parois de ladite chambre, rappelée élastiquement en direction de ladite chambre par un ressort (31), cette membrane souple (27) supportant une cage (33) renfermant un aimant (37), ces moyens de détection comprenant en outre lesdits moyens de mesure (15) montés fixes par rapport au corps (23) de l'inverseur automatique, aptes à interagir magnétiquement avec ledit aimant (37).

4. Ensemble selon l'une quelconque des revendications précédentes, comprenant un circuit électronique de communication (21), relié auxdits moyens de mesure (15), et permettant de transmettre vers l'extérieur les signaux engendrés par ces moyens de mesure (15).

5. Ensemble selon la revendication 4, dans lequel ledit circuit électronique de communication (21) est noyé dans de la résine.

6. Ensemble selon l'une des revendications 4 ou 5, dans lequel ledit circuit électronique (21) comprend des moyens de communication sans fil, et une batterie d'alimentation (19).

7. Ensemble selon l'une quelconque des revendications précédentes dépendant de la revendication 6, dans lequel lesdits moyens de mesure (15) et ledit circuit électronique (21) sont montés sur une plaque (13) pouvant être rapportée de manière optionnelle sur le corps (23) dudit ensemble de régulation.

8. Ensemble selon l'une quelconque des revendications précédentes, comprenant en outre un détendeur de pression (D) muni de ses propres moyens de détection.

9. Ensemble selon l'une quelconque des revendications précédentes, comprenant en outre un limiteur de pression (L) muni de ses propres moyens de détection.

## Patentansprüche

1. Automatische Umschalteranordnung für eine Gasversorgung von dem Typ, der mindestens zwei Einlässe (5a, 5b), die mit mindestens zwei Gasflaschen gekoppelt werden können, einen Auslass (7), der mit einem Gas verbrauchenden Gerät gekoppelt werden kann, und Mittel zum automatischen Wechseln der Gasversorgung von einem der Einlässe (5a, 5b) durch eine der Flaschen zu dem anderen Einlass durch die andere der Flaschen, wenn der Gasversorgungsdruck unter einen vorbestimmten Schwellenwert fällt, umfasst, wobei die Anordnung mindestens einen Einlass (5a, 5b), der mit mindestens einer Gasflasche in Fluidverbindung gebracht werden kann, und einen Auslass (7), der mit einem Gas verbrauchenden Gerät in Fluidverbindung gebracht werden kann, und Mittel (15, 37) zum Detektieren des Drucks des Gases in einer Kammer (25), die mit dem Auslass (7) in Verbindung steht, umfasst, wobei die Detektionsmittel Mittel zum Messen (15) der Änderung eines Magnetfelds umfassen.

2. Anordnung nach einem der Ansprüche 1, wobei die Messmittel eine Hall-Effekt-Sonde oder Elemente umfassen, die es ermöglichen, eine Magnetfeldmessung (15) vorzunehmen.

3. Anordnung nach Anspruch 1 oder 2, wobei die Gasdruckdetektionsmittel eine weiche Membran (27) umfassen, die eine der Wände der Kammer bildet und durch eine Feder (31) elastisch in Richtung der Kammer zurückgestellt wird, wobei die weiche Membran (27) einen Käfig (33) trägt, der einen Magneten (37) umschließt, wobei die Detektionsmittel weiter die Messmittel (15) umfassen, die in Bezug auf den Körper (23) des automatischen Umschalters fest montiert sind und mit dem Magneten (37) magnetisch wechselwirken können.

4. Anordnung nach einem der vorstehenden Ansprüche, die eine elektronische Kommunikationsschaltung (21) umfasst, die mit den Messmitteln (15) verbunden ist und es ermöglicht, die von den Messmitteln (15) erzeugten Signale nach außen zu übertragen.

5. Anordnung nach Anspruch 4, wobei die elektronische Kommunikationsschaltung (21) in Harz eingebettet ist.

6. Anordnung nach einem der Ansprüche 4 oder 5, wobei die elektronische Schaltung (21) drahtlose Kommunikationsmittel und eine Versorgungsbatterie (19) umfasst.

7. Anordnung nach einem der vorstehenden Ansprüche in Abhängigkeit von Anspruch 6, wobei die Messmittel (15) und die elektronische Schaltung (21) auf einer Platte (13) montiert sind, die gegebenenfalls am Körper (23) der Regelungsanordnung angebracht sein kann.

8. Anordnung nach einem der vorstehenden Ansprüche, die weiter einen Druckminderer (D) umfasst, der mit seinen mit eigenen Detektionsmitteln ausgestattet ist.

9. Anordnung nach einem der vorstehenden Ansprüche, die weiter einen Druckbegrenzer (L) umfasst, der mit seinen eigenen Detektionsmitteln ausgestattet ist.

## Claims

1. An automatic diverter assembly for gas supply, of the type comprising at least two inlets (5a, 5b) capable of being coupled to at least two gas cylinders, an outlet (7) capable of being coupled to a gas-consuming appliance, means for automatically switching the gas supply from one of said inlets (5a, 5b) via one of said cylinders to the other inlet via the other of said cylinders when the gas supply pressure falls below a predetermined threshold, the assembly comprising at least one inlet (5a, 5b) capable of being placed in fluid communication with at least one gas cylinder, and an outlet (7) capable of being placed in fluid communication with a gas-consuming appliance, and means (15, 37) for detecting the gas pressure in a chamber (25) communicating with said outlet (7), said detection means comprising means (15) for measuring the variation of a magnetic field.

2. The assembly according to claim 1, wherein said measuring means comprise a Hall effect probe or elements allowing performing a magnetic field measurement (15).

3. The assembly according to claim 1 or 2, wherein said gas pressure detection means comprise a flexible membrane (27) forming one of the walls of said chamber, elastically biased towards said chamber by a spring (31), this flexible membrane (27) supporting a cage (33) enclosing a magnet (37), these detection means further comprising said measuring means (15) fixedly mounted relative to the body (23) of the automatic diverter, capable of magnetically interacting with said magnet (37).

4. The assembly according to any one of the preceding claims, comprising an electronic communication circuit (21), connected to said measuring means (15), and allowing transmitting the signals generated by these measuring means (15) to the outside.

5. The assembly according to claim 4, wherein said electronic communication circuit (21) is embedded in resin.

6. The assembly according to any of claims 4 or 5, wherein said electronic circuit (21) comprises wireless communication means, and a power battery (19).

7. The assembly according to any one of the preceding claims dependent on claim 6, wherein said measuring means (15) and said electronic circuit (21) are mounted on a plate (13) which can be optionally attached to the body (23) of said regulation assembly.

8. The assembly according to any one of the preceding claims, further comprising a pressure regulator (D) provided with its own detection means.

9. The assembly according to any one of the preceding claims, further comprising a pressure limiter (L) provided with its own detection means.
